# EUROPÄISCHE PATENTANMELDUNG

(11) **EP 2 186 863 A1**
(43) Veröffentlichungstag der Anmeldung: **19.05.2010**
(21) Anmeldenummer: 08019980.5
(22) Anmeldetag: 15.11.2008
(51) Int. Cl.: C09D 5/02, C09D 7/12, C09D 7/06

(54) **Verwendung von Anlagerungsprodukten von Ethylen- und/oder Propylenoxid an Fettalkohole als Koaleszenzmittel**

(71) Anmelder: Cognis IP Management GmbH, 40589 Düsseldorf (DE)
(72) Erfinder: Shah, Shailesh C., Dresher, PA 19025 (US); Schulte, Heinz-Günther, 41564 Kaarst (DE); Schieferstein, Ludwig, 40882 Ratingen (DE); Frommelius, Harald, 40789 Monheim (DE); Bergmann, Edda, 40599 Düsseldorf (DE)

(57) **Zusammenfassung**

Anlagerungsprodukte (A) von Ethylen- und/oder Propylenoxid an Fettalkohole mit 8 bis 22 C-Atomen eignen sich als Koaleszenzmittel, insbesondere bei der Herstellung von Beschichtungen jeglicher Art auf Basis wässriger Polymer- bzw. Latex-Dispersionen.

## Beschreibung

### Gebjet der Erfindung

Die Erfindung betrifft die Verwendung bestimmter Anlagerungsprodukte von Ethylen- und/oder Propylenoxid an Fettalkohole als Koaleszenzmittel.

### Stand der Technik

Koaleszenzmittel (auch Filmbildehilfsmittel genannt) sind an sich bekannt. Sie werden wässrigen Beschichtungsstoffen zugesetzt und bewirken ein Verfilmen der dispergierten Polymerteilchen zu einem homogenen Lackfilm. Ihr Zusatz ist dann erforderlich, wenn die Filmbildetemperatur des Bindemittels oberhalb der Anwendungstemperatur liegt.

Bekannte Filmbildehilfsmittel sind: Ethylenglykolethylether, Ethylenglykolpropylether, Ethylenglykolbutylether, Ethylenglykolhexylether, Diethylenglykolmethylether, Diethylenglykolethylether, Diethylenglykolbutylether, Diethylenglykolhexylether, Propylenglykol-n-butylether, Dipropylenglykol-n-butylether, Dipropylenglykolmethylether, Tripropylenglykolmethylether, Propylenglykolphenylether, Propylenglykol-t-butylether, 2,2,4-Trimethyl-1,3-pentandiol-mono-isobutyrat, 2,2,4-Trimethyl-1,3-pentandioldiisobutyrat (vergleiche "Farbe + Lack, 101(7/1995), S. 606-609).

In letzter Zeit sind wasserbasierte Beschichtungen aus ökologischen Gründen sehr aktuell geworden. Traditionell wurden bei Latex-Beschichtungen, die insbesondere auf kleinen Teilchen synthetischer Kunststoffe wie Polyacrylaten basieren, Koaleszenzmittel in substanziellen Mengen eingesetzt. Diese Koaleszenzmittel (auch Verfilmungshilfsmittel genannt) werden den Beschichtungen zugesetzt, um die Filmbildung zu verbessern. Die Funktion beruht darauf, dass das Koaleszenzmittel weichmachend auf die Latexteilchen einwirkt, so dass diese zusammenfließen und einen kontinuierlichen Film ausbilden können. Dieser Film hat nach der Verdunstung des Wassers optimale Filmeigenschaften. Bei der Ausbildung eines Films ist die sogenannte Filmbildetemperatur von Bedeutung, bei der (bzw. unterhalb der) die Polymerteilchen zu einem Film zusammenfließen. Die üblichen Koaleszenzmittel senken die Filmbildetemperatur des Polymers.

Konventionelle Koaleszenzmittel sind bestimmte Ester und Ether; bekannte technische Standards sind der Hydroxyester "Texanol" von Eastman (auch oft TMB genannt; ein 2,2,4-Trimethyl-1,3-pentandiol-mono-isobutyrat) sowie "EGBE" von Union Carbide (Ethylenglykolmonobutylether).

### Beschreibung der Erfindung

Es besteht ständiger Bedarf an neuen Koaleszenzmitteln. Es war daher die Aufgabe der vorliegenden Erfindung Koaleszenzmittel zur Verfügung zu stellen. Diese sollten sich insbesondere für die Herstellung von Beschichtungen wie Lacken, Farben und dergleichen eignen, aber auch für Klebstoffe. Ein besonders bevorzugtes Gebiet für den Einsatz der bereitzustellenden Koaleszenzmittel sind die sogenannten Dispersionsfarben.

Der Begriff der Koaleszenzmittel (in der Literatur auch Verfilmungshilfsmittel oder Filmbildehilfsmittel genannt) ist dabei in dem oben dargestellten und dem Fachmann wohlvertrauten Sinne zu verstehen.

Es sei ausdrücklich festgestellt, dass sich die erfindungsgemäß zu entwickelnden Koaleszenzmittel insbesondere für den Einsatz in wässrigen Dispersionen von Kunststoffen bzw. Latexteilchen, die für Beschichtungszwecke jeglicher Art geeignet sind (zum Beispiel für wasserbasierte Lacke und Farben), bestimmt sind.

Derartige Dispersionen, die typischerweise durch Emulsionspolymerisation hergestellt werden und die neben Wasser, den in der Emulsionspolymerisation eingesetzten Hilfsstoffen und den Kunststoff- bzw. Latexteilchen weitere Bestandteile enthalten können, die für den jeweils gewünschten Beschichtungszweck üblicherweise eingesetzt werden, werden üblicherweise auf die zu beschichtende Oberfläche appliziert, danach erfolgt ein Verdunsten des Wassers und schließlich ist es wesentlich, dass die Polymer- bzw. Latexteilchen ineinanderfließen und einen homogenen Film bilden. Dieser Prozess der Filmbildung setzt voraus, dass eine Mindesttemperatur eingehalten wird, die vom Fachmann Mindestfilmbildetemperatur (MFT) genannt wird. Beträgt die MFT eines Systems beispielsweise 20 °C, so bedeutet dies, dass eine Filmbildung nur dann erfolgreich verläuft, wenn die Temperatur 20 °C oder höher ist. Will man hingegen eine Filmbildung bei niedrigeren Temperaturen bewirken, zum Beispiel bei 10 °C oder noch niedrigeren Temperaturen, so muss man den genannten wässrigen Dispersionen ein Koaleszenzmittel in einer Menge zusetzen, dass die MFT auf den gewünschten Wert gesenkt wird.
In dieser Hinsicht hat sich die vorliegende Erfindung insbesondere zum Ziel gesetzt Koaleszenzmittel zu entwickeln, die die MFT von wässrigen Dispersionen von Kunststoff- bzw. Latexteilchen, die für beliebige Beschichtungszwecke bestimmt sind, möglichst effektiv zu senken.
Ein weiteres Ziel der vorliegenden Erfindung war es, Koaleszenzmittel zu entwickeln, die sich durch einen äußerst niedrigen VOC-Gehalt (VOC = volatile organic carbon) auszeichnen.
Ein weiteres Ziel der vorliegenden Erfindung war es, Koaleszenzmittel zu entwickeln, die den zusätzlichen Vorteil aufweisen, als Lösevermittler für Assoziativverdicker auf Polyurethan-Basis zu wirken.

Gegenstand der Erfindung ist Verwendung von Anlagerungsprodukten (A) von Ethylen- und/oder Propylenoxid an Fettalkohole mit 8 bis 22 C-Atomen als Koaleszenzmittel. Dabei können die Fettalkohole gesättigt oder ungesättigt, geradkettig oder verzweigt sein.

Beispiele geeigneter Fettalkohole, die als Bausteine der Anlagerungsprodukte (A) in Frage kommen, sind etwa Octanol, Decanol, Dodecanol, Tetradecanol, Hexadecanol, Diese Fettalkohole zählen zu den gesättigten Fettalkoholen. Sie werden im Rahmen der vorliegenden Erfindung vorzugsweise als Fettalkohol-Bausteine der Anlagerungsprodukte (A) eingesetzt. Fettalkohole nativen Ursprungs sind dabei bevorzugt

In einer Ausführungsform wird der Fettalkoholbaustein der Anlagerungsprodukte (A) ausgewählt aus Fettalkoholen mit 12 bis 14 C-Atomen.

In einer Ausführungsform werden die Anlagerungsprodukte (A) ausgewählt unter folgenden Verbindungen:
(a1) erhältlich durch Umsetzung von 1 bis 6 mol Ethylenoxid mit Fettalkoholen mit 8 bis 18 C-Atomen und
(a2) erhältlich durch Umsetzung von 2 bis 8 mol Ethylenoxid und 1 bis 6 mol Propylenoxid mit Fettalkoholen mit 8 bis 18 C-Atomen.

In einer bevorzugten Ausführungsform werden die Anlagerungsprodukte (A) ausgewählt unter folgenden Verbindungen:
(a1*) erhältlich durch Umsetzung von 3 bis 6 mol Ethylenoxid mit Fettalkoholen mit 8 bis 18 C-Atomen und
(a2*) erhältlich durch Umsetzung von 2 bis 8 mol Ethylenoxid und 2 bis 6 mol Propylenoxid mit Fettalkoholen mit 8 bis 18 C-Atomen.

Beispiele für die Verbindungen (a1) und (a1*) sind etwa erhältlich durch Umsetzung von 4 mol Ethylenoxid mit 1 mol Octanol.

Beispiele für die Verbindungen (a2) und (a2*) sind etwa erhältlich durch Umsetzung von 2 mol Ethylenoxid und 4 mol Propylenoxid mit 1 mol eines Gemisches von Dodecanol und Tetradecanol, von 3 mol Ethylenoxid und 6 mol Propylenoxid mit 1 mol eines Gemisches von Dodecanol und Tetradecanol, von 5 mol Ethylenoxid und 4 mol Propylenoxid mit 1 mol eines Gemisches von Dodecanol und Tetradecanol. Die drei letztgenannten Verbindungen sind Handelsprodukte der Firma Cognis und unter den Bezeichnungen Lorol LS24, LS36 und LS 54 erhältlich.

In einer Ausführungsform setzt man die oben genannten Anlagerungsprodukte (A) bei der Herstellung von Beschichtungen jeglicher Art auf Basis wässriger Polymer- bzw. Latex-Dispersionen ein.
Ein besonders bevorzugtes Gebiet für den Einsatz Anlagerungsprodukte (A) als Koaleszenzmittel sind die so genannten (wasserbasierten bzw. wässrigen) Dispersionsfarben.

Die Anlagerungsprodukte (A) sind als Koaleszenzmittel sehr effizient, was daran ersichtlich ist, dass sie die minimale Filmbildungstemperatur (MFT) von wässrigen Polymerdispersionen ganz ausgezeichnet zu senken vermögen.

Die erfindungsgemäß einzusetzenden Anlagerungsprodukte (A) können in reiner Form oder in Form von Mischungen untereinander eingesetzt werden. Gewünschtenfalls kann man die Anlagerungsprodukte (A) auch in Kombination mit bekannten Koaleszenzmitteln einsetzen.

Wie bereits ausgeführt kommen die erfindungsgemäß einzusetzenden Anlagerungsprodukte (A) insbesondere als Koaleszenzmittel für wäßrige Dispersionen von zu verfilmenden Polymer- bzw. Latexteilchen zum Einsatz. Dies gilt sowohl, wenn die Anlagerungsprodukte (A) allein (in Form einer reinen Species oder einer Mischung verschiedener Species) oder in Abmischung mit anderen - davon verschiedenen - Koaleszenzmitteln eingesetzt werden.

Die Anlagerungsprodukte (A) werden dabei vorzugsweise (je nach MFT des Polymers) in Mengen von 0,1 bis 40 Gew.-% und insbesondere 2 bis 6 Gew.-% - bezogen auf die Menge der Polymer- bzw. Latexteilchen, deren Mindestfilmbildetemperatur gesenkt werden soll - eingesetzt.
In einer anderen Betrachtungsweise kann man die Menge der Anlagerungsprodukte (A) auf eine fertige Beschichtungsrezeptur beziehen, die auf eine Oberfläche appliziert werden soll. In dieser Hinsicht werden die Anlagerungsprodukte (A) vorzugsweise (je nach MFT des Polymers) in Mengen von 0,1 bis 5 Gew.-% und insbesondere 0,5 bis 2% Gew.-% - bezogen auf die gesamte Beschichtungsrezeptur - eingesetzt.
Der Fachmann kann die Menge der Anlagerungsprodukte (A) je nach der Zusammensetzung einer konkreten Dispersion bzw. einer konkreten Beschichtungsrezeptur variieren und bei Bedarf auch höhere Mengen an Anlagerungsprodukten (A) einsetzen, insbesondere wenn das System Polymere mit hoher Mindestfilmbildetemperatur enthält und/oder eine Senkung auf möglichst niedrige MFT-Werte erfolgen soll.

In einer bevorzugten Ausführungsform verwendet man Zusammensetzungen enthaltend
(i) ein oder mehrere der oben genannten Anlagerungsprodukte (A) und
(ii) ein oder mehrere Assoziativverdicker
als Koaleszenzmittel.
In einer Ausführungsform setzt man diese Zusammensetzungen bei der Herstellung von Beschichtungen jeglicher Art auf Basis wässriger Polymer- bzw. Latex-Dispersionen oder auf Basis von wässrigen Dispersionsfarben ein.

Hinsichtlich der Natur der in den wässrigen Dispersionen vorhandenen Polymer- bzw. Latexteilchen gelten keine besonderen Beschränkungen. Es können somit alle dem Fachmann für Beschichtungszwecke einschlägig bekannten Polymeren und Copolymeren eingesetzt werden.
Die wässrigen Dispersionen können im übrigen je nach gewünschtem Anwendungszeck bzw. der Art der Beschichtung weitere, dem Fachmann einschlägig bekannte Additive und Zusatzstoffe enthalten.
Die erfindungsgemäßen Anlagerungsprodukte (A) können den wässrigen Dispersionen unmittelbar nach der Herstellung, die vorzugsweise durch Emulsionspolymerisation erfolgt, aber auch zu einem späteren Zeitpunkt, etwa während der Herstellung eines Beschichtungsstoffes, zudosiert werden.

Die wässrigen Dispersionen mit einem Gehalt an erfindungsgemäß einzusetzendem Anlagerungsprodukt (A) können im Prinzip auf beliebige Oberflächen aufgebracht werden, beispielsweise auf Holz, Metall, Kunststoff, Glas, Papier, Beton, Mauerwerk und Putze.

### Beispiele

### Abkürzungen

Sofern nicht explizit anders vermerkt handelt es sich bei %-Angaben um Gew.-%.

### Eingesetzte Substanzen

| | |
|---|---|
| DSX 3290 | Assoziativverdicker auf Polyurethan-Basis (Fa. Cognis) |
| Acronal 290D | Wäßrige Polymerdispersion auf Basis Butylacrylat/Styrol (Fa. BASF) |
| Rhoplex SG 30 | Wäßrige Polymerdispersion auf Basis Acrylsäureester (Fa. Rohm & Haas) |

### Koaleszenzmittel

| | |
|---|---|
| A1 | Anlagerungsprodukt von 2 mol Ethylenoxid und 4 mol Propylenoxid an 1 Mol eines 1 : 1 Gemisches von Dodecanol und Tetradecanol |
| A2 | Anlagerungsprodukt von 4 Mol Ethylenoxid an 1 Mol Octanol |
| A3 | Mischung aus 50% A1, 5% DSX 3290 und 45% 1,2 Propylenglykol |
| A4 | Mischung aus 60% A2, 5% DSX 3290 und 35% Wasser |
| V1 | Mischung aus 95% 1,2 Propylenglykol und 5% DSX 3290 |

Die Koaleszenzmittel gemäß A1 bis A4 enthalten die erfindungsgemäß einzusetzenden Anlagerungsprodukte von Ethylen- und/oder Propylenoxid an Fettalkohole mit 8 bis 22 C-Atomen. Bei V1 handelt es sich um ein Koaleszenzmitel, das zum Vergleich dient.

### Herstellung und Beurteilung der Beschichtungen

Der Zusatz des zu prüfenden Koaleszenzmittels (A1, A2, A3, A4 oder V1) zur jeweiligen Polymerdispersion erfolgte unter Rühren. Nach 24-stündiger Reifezeit wurde dann die Mindestfilmbildetemperatur (MFT) bestimmt. Die Prüfung der Mindestfilmbildetemperatur (MFT) erfolgte gemäß DIN 53787. Die Prüfergebnisse sind der Tabelle 1 zu entnehmen.

**Tabelle 1**

| Acronal 290 D | | | | Rhoplex SG 30 | | |
|---|---|---|---|---|---|---|
| | MFT [°C] | | | | | |
| | Ohne Additiv | 2% Additiv | 3% Additiv | Ohne Additiv | 2% Additiv | 3% Additiv |
| V1 | 20 | 17 | 15 | 13 | 13 | 13 |
| A1 | 21 | 9 | | | | |
| A2 | 22 | 9 | | | | |
| A3 | 20 | 14 | 12 | 13 | 11 | 9 |
| A4 | 20 | 14 | 13 | 13 | 11 | 9 |

| | | | | | | |
|---|---|---|---|---|---|---|
| in der Tabelle 1 bedeutet: **% Additiv (A1, A2, A3, A4 bzw. V1)** = die der wässrigen Polymerdispersion zugesetzte Menge an Koaleszenzmittel ist in Gew.-% - bezogen auf die Polymerdispersionen (in der Form wie diese vom Hersteller geliefert wurden) - angegeben. | | | | | | |

Wie aus Tabelle 1 ersichtlich wird die MFT durch den Zusatz des Additivs gesenkt. Mithin ist das Additiv ein Koaleszenzmittel.

Die erfindungsgemäßen Ester A1 und A2 und deren Mischungen A3 und A4 weisen neben Ihrer Eignung als Koaleszenzmittel den zusätzlichen Vorteil auf, als Lösevermittler für Assoziativverdicker auf Polyurethan-Basis zu wirken.

## Patentansprüche

1. Verwendung von Anlagerungsprodukten (A) von Ethylen- und/oder Propylenoxid an Fettalkohole mit 8 bis 22 C-Atomen als Koaleszenzmittel.

2. Verwendung nach Anspruch 1, wobei der Fettalkoholbaustein der Anlagerungsprodukte (A) ausgewählt wird aus Fettalkoholen mit 12 bis 14 C-Atomen.

3. Verwendung nach Anspruch 1 oder 2, wobei die Anlagerungsprodukte (A) ausgewählt werden unter denjenigen Verbindungen, die erhältlich sind (a1) durch Umsetzung von 1 bis 6 mol Ethylenoxid mit Fettalkoholen mit 8 bis 18 C-Atomen und (a2) durch Umsetzung von 2 bis 8 mol Ethylenoxid und 1 bis 6 mol Propylenoxid mit Fettalkoholen mit 8 bis 18 C-Atomen.

4. Verwendung nach Anspruch 1 oder 2, wobei die Anlagerungsprodukte (A) ausgewählt werden unter denjenigen Verbindungen, die erhältlich sind (a1) durch Umsetzung von 3 bis 6 mol Ethylenoxid mit Fettalkoholen mit 8 bis 18 C-Atomen und (a2) durch Umsetzung von 2 bis 8 mol Ethylenoxid und 2 bis 6 mol Propylenoxid mit Fettalkoholen mit 8 bis 18 C-Atomen.

5. Verwendung nach einem der Ansprüche 1 bis 4 bei der Herstellung von Beschichtungen jeglicher Art auf Basis wässriger Polymer- bzw. Latex-Dispersionen.

6. Verwendung nach Anspruch 5 bei der Herstellung von Beschichtungen auf Basis von wässrigen Dispersionsfarben.

7. Verwendung von Zusammensetzungen enthaltend
(i) ein oder mehrere der Anlagerungsprodukte (A) gemäß einem der Ansprüche 1 bis 4 und
(ii) ein oder mehrere Assoziativverdicker
als Koaleszenzmittel.

8. Verwendung nach Anspruch 6 bei der Herstellung von Beschichtungen jeglicher Art auf Basis wässriger Polymer- bzw. Latex-Dispersionen..

9. Verwendung nach Anspruch 7 bei der Herstellung von Beschichtungen auf Basis von wässrigen Dispersionsfarben.
